**Europäisches Patentamt**

**European Patent Office**

**Office européen des brevets**

(19)

(11) Veröffentlichungsnummer: **0 164 438 B1**

# (12) EUROPÄISCHE PATENTSCHRIFT

(45) Veröffentlichungstag der Patentschrift:
**07.01.88**

(51) Int. Cl.⁴: **F 16 K 47/10,** F 16 K 15/00

(21) Anmeldenummer: **84106877.8**

(22) Anmeldetag: **15.06.84**

(54) **Hydraulikventil.**

(43) Veröffentlichungstag der Anmeldung:
**18.12.85 Patentblatt 85/51**

(45) Bekanntmachung des Hinweises auf die Patenterteilung:
**07.01.88 Patentblatt 88/1**

(84) Benannte Vertragsstaaten:
**AT BE CH DE FR GB IT LI LU NL SE**

(56) Entgegenhaltungen:
**FR - A - 1 580 794**
**FR - A - 2 373 738**
**GB - A - 1 003 336**
**US - A - 2 924 237**
**US - A - 3 120 243**

(73) Patentinhaber: **Heilmeier & Weinlein Fabrik für Oel-Hydrauiik GmbH & Co. KG, Neumarkter Strasse 26, D-8000 München 80 (DE)**

(72) Erfinder: **Brunner, Rudolf, Wankstrasse 23, D-8011 Baldham (DE)**

(74) Vertreter: **Patentanwälte Grünecker, Dr. Kinkeldey, Dr. Stockmair, Dr. Schumann, Jakob, Dr. Bezold, Meister, Hilgers, Dr. Meyer-Plath, Maximilianstrasse 58, D-8000 München 22 (DE)**

ACTORUM AG

## Beschreibung

Die Erfindung betrifft ein Hydraulikventil der im Oberbegriff des Patentanspruchs 1 angegebenen Art.

Bei seit Jahrzehnten aus der Praxis bekannten Hydraulikventilen dieser Art, bei denen die weitere Ventilfunktion eine gedrosselte Strömung in der vom Rückschlagventil gesperrten Strömungsrichtung ist, wurde der den Durchlass umgehende Kanal ausserhalb des durch die fluchtenden Bohrungen begrenzten Querschnitts des Gehäuses angeordnet. Dazu war es erforderlich, das Gehäuse im Bereich des Kanals quer zur Strömungsrichtung zu vergrössern oder aussen auf das Gehäuse einen domförmigen Aufbau anzubringen. Dies stand in krassem Gegensatz zu dem Bestreben, die Gehäuseabmessungen der Hydraulikventile quer zur Durchströmungsrichtung nur so klein zu wählen, wie dies durch die Grösse der Anschlussarmaturen in den Bohrungen gerade noch möglich war. Für die weitere Ventilfunktion, z.B. für den umgehenden Kanal, war zudem ein erheblicher und unzweckmässiger baulicher Aufwand zu treiben. Es ergab sich ferner eine für bestimmte Betriebsverhältnisse unerwünschte Strömungsumlenkung im umgehenden Kanal.

Bei einem aus der FR-A-1 580 794 bekannten Hydraulikventil dieser Art liegt die Gehäusetrennwand in der Gehäuselängsmitte. Der Kanal und der Durchlass verlaufen deshalb quer zu den Achsen der Anschlussbohrungen, was unerwünschte Strömungsumlenkungen für beide Ventilfunktionen ergibt.

Aus der US-A-2 924 237 ist ein Hydraulikventil einer anderen Art bekannt, bei dem zwar der Durchlass parallel zu den Anschlussbohrungen verläuft. Der umgehende Kanal besitzt jedoch mehrere Umlenkungen, die für die Strömung ungünstig sind. Ausserdem fehlt eine Gehäusetrennwand zwischen den Aussenbohrungen.

Der Erfindung liegt die Aufgabe zugrunde, ein Hydraulikventil der eingangs genannten Art zu schaffen, bei dem trotz einfachen Aufbaus und kompakter Gehäuseform nennenswerte Strömungsumlenkungen bei beiden Ventilfunktionen vermieden werden.

Die gestellte Aufgabe wird erfindungsgemäss durch die im kennzeichnenden Teil des Patentanspruchs 1 angegebenen Merkmale gelöst.

Da der Kanal gemeinsam mit dem Durchlass in dem durch die Grösse der fluchtenden Anschlussbohrungen begrenzten Querschnitt und im wesentlichen parallel zu diesen untergebracht sind, wird die Gehäuseabmessung quer zur Strömungsrichtung nur von der Grösse der Anschlussbohrungen bestimmt. Das Gehäuse ist kompakt. Der bauliche Aufwand zur Unterbringung des Kanals ist gering, da dieser wie auch der Durchlass einfach in der Gehäusetrennwand untergebracht ist oder in diese hineinführt. Da der Durchlass und der Kanal im wesentlichen parallel zueinander und auch zu den Anschlussbohrungen und nicht in Strömungsrichtung hintereinander angeordnet sind, beeinflussen sich beide Ventilfunktionen nicht gegenseitig und unterbleiben auch die Druckdifferenzen für beide Ventilfunktionen erhöhende Umlenkungen. Die Konstruktion des Hydraulikventils beruht auf der Erkenntnis, dass die Anschlussbohrungen zumeist im Querschnitt wesentlich grösser sind, als es für nur eine Ventilfunktion erforderlich ist und es ohne weiteres zulassen, einen Kanal für wenigstens eine weitere Ventilfunktion parallel zum Durchlass in dem gegebenen Querschnitt der Gehäusetrennwand unterzubringen.

Eine zweckmässige Ausführungsform geht aus Anspruch 2 hervor. Die Leitungs-Anschluss-Armaturen benötigen für die einwandfreie Dichtfunktion auch bei hohen Drücken und für ein einfaches Handhaben eine bestimmte Grösse, die letztendlich die Grösse des Gehäuses des Ventils vorgibt. Die Gehäusegrösse ist damit indirekt abhängig von der Grösse der Armaturen und lässt es ohne nennenswerten konstruktiven Aufwand zu, die Strömungswege für zwei eigentlich voneinander unabhängige Ventilfunktionen ohne Vergrösserung der Abmessungen des Gehäuses zueinander parallel unterzubringen.

Eine weitere zweckmässige Ausführungsform geht aus Anspruch 3 hervor. Bei dieser Ausbildung wird der Kanal sozusagen angezapft oder von einem Anschlusskanal gebildet, der von dem Strömungsweg für die erste Ventilfunktion abgezweigt ist. Der Anschlusskanal kann für eine getrennte Pilotfunktion oder eine Druckeinspeisung in das Hydraulikventil bei gesperrtem Rückschlagventil benutzt werden.

Eine weitere zweckmässige Ausführungsform, bei der die weitere Ventilfunktion die eines Drosselventils mit in der vom Rückschlagventil gesperrten Strömungsrichtung gedrosselter Durchströmung ist, geht aus Anspruch 4 hervor. Die hauptsächliche Durchströmung des Ventils wird in einer bestimmten Strömungsrichtung durch das Rückschlagventil gesperrt. Es ist dann nur mehr eine gedrosselte Strömung in dieser Richtung möglich, und zwar in dem Masse, wie die Drosselwirkung im Drosseldurchgang vorbestimmt ist. Es könnte im Kanal auch eine Druckmessung oder Mengenmessung vorgenommen werden. Denkbar ist es ferner im Kanal ein Schaltelement anzubringen, das bei gesperrtem Rückschlagventil ein Signal abgibt. Sobald das Rückschlagventil in seiner offenen Stellung steht, ist die Strömung durch den Drosseldurchgang ohne Bedeutung. Hingegen beeinflusst bei gesperrtem Rückschlagventil dieses die vorbestimmte Strömung im Drosseldurchgang nicht.

Eine weitere vorteilhafte Ausführungsform ergibt sich gemäss Anspruch 5, wobei ein Drosselglied in den Kanal eingreift, das zur Veränderung der Drosselwirkung verstellbar ist. Bei dieser Ausführungsform ist die weitere Ventilfunktion veränderbar, in dem das Drosselglied entsprechend verstellt wird. Die Durchströmung des offenen Rückschlagventils bzw. die gesperrte Strömung bei geschlossenem Rückschlagventil werden durch die weitere Ventilfunktion nicht beeinflusst bzw. nur im vorbestimmten Masse. In der Gehäusetrennwand ist eine verhältnismässig lange Führungsbohrung unterzubringen, wodurch sich ein grosser Verstellbereich für das Drosselglied einerseits und keine nennenswerte Vergrösserung des Gehäuses quer zur Strömungsrichtung andererseits erzielen lässt. Es ist also auch bei dieser Ausführungsform die Gehäusegrösse nicht durch die Ventilfunktionen bestimmt, sondern durch die Grösse der miteinander fluchtenden Bohrungen, in denen die Anschlussarmaturen eingesetzt werden.

Zweckmässig ist ferner die Ausführungsform von Anspruch 6, da der grösste Teil der Längserstreckung der Verstellspindel in der Gehäusetrennwand untergebracht ist, so dass die aussenliegende Verstelleinrichtung nahe an die Aussenseite des Gehäuses herangesetzt und das Hydraulikventil insgesamt kompakt aufgebaut sein kann.

Der für die Rückschlagfunktion vorgesehene Teil des begrenzten Querschnitts der Gehäusetrennwand wird dann gut ausgenutzt, wenn die Merkmale von Anspruch 7 gegeben sind. Es könnten auch mehr als zwei Bohrungen den Durchlass bilden. Das das Ventilelement bildende Plättchen braucht nur die Mündungen der Bohrungen abzudecken, um eine einwandfreie Rückschlagwirkung zu erbringen, während es den verbleibenden Teil des begrenzten Querschnitts für die weitere Ventilfunktion freilässt.

Eine baulich einfache und über lange Betriebszeiten zuverlässig arbeitende Ausführungsform geht weiterhin aus Anspruch 8 hervor. Obwohl das Plättchen in der Sperrstellung des Rückschlagventils den Durchlass zuverlässig abdichtet, lässt sich der verbleibende Teil des begrenzten Querschnitts gut dazu nutzen, bei offenem Rückschlagventil die dann auftretende, verhältnismässig starke Strömung ungehindert durchzulassen.

Ein weiterer, wichtiger Gedanke ist in Anspruch 9 enthalten. Dem Führungselement wird bei dieser Ausführungsform eine zusätzliche Funktion zugewiesen, durch welche verhindert wird, dass das Drosselglied ungewollt zu weit verstellt wird. Dadurch entfallen zusätzliche Massnahmen, die üblicherweise für diesen Zweck erforderlich sind.

Ein weiterer zweckmässiger Gedanke ist in Anspruch 10 enthalten, weil dadurch ein Druckausgleich zwischen den Bohrungen des Durchlasses einerseits stattfindet und in der Führungsbohrung kein Totraum entsteht, in dem sich ein Druck aufbauen könnte, der die Verstellbewegung des Drosselgliedes behindern könnte. Wenn wenigstens eine Bohrung des Durchlasses die Führungsbohrung schneidet, wird in wünschenswerter Weise vom Kanal über das Drosselglied durchleckendes Arbeitsmedium einfach abgeleitet.

Eine weitere, zweckmässige Ausführungsform geht aus Anspruch 11 hervor. Bei dieser Ausbildung wird ein Druckabbau in zwei Stufen erreicht, der den bisher bei hohen Arbeitsdrücken und grosser Förderleistung oftmals auftretenden Nachteil einer starken Geräuschentwicklung beseitigt. In der ersten Druckabbaustufe wird ein beträchtlicher Teil des gesamten abzubauenden Druckes abgebaut, und zwar in den Gegendruck der zweiten Druckabbaustufe hinein, so dass dort eine wirksame Dämpfung eintritt, während in der zweiten Druckabbaustufe nur mehr ein Restdruck ohne Geräuschentwicklung und Kavitation abgebaut wird.

Eine weitere, zweckmässige Ausführungsform geht aus Anspruch 12 hervor. Die auf diese Weise angezapfte Führungsbohrung ist in der Lage, entweder einen Hilfssteuerdruck zu liefern, oder einer Überwachungseinrichtung die Druckverhältnisse der zweiten Ventilfunktion mitzuteilen. Denkbar wäre es ferner, über den Anschlusskanal eine zusätzliche Druckeinspeisung vorzunehmen.

Eine weitere alternative Ausführungsform geht aus Anspruch 13 hervor. Bei dieser Ausbildung lässt sich auf einfache Weise ein Druckausgleich an der Verstellspindel bzw. dem Drosselglied erreichen, was dessen leichtgängige Verstellung begünstigt.

Eine weitere, baulich besonders einfache Ausführungsform geht schliesslich aus Anspruch 14 hervor. Allein durch Verdrehen des Drosselgliedes wird die jeweilige Drosselwirkung eingestellt. Die Dichtung zwischen den Gewinden reicht leicht für die ordnungsgemässe weitere Ventilfunktion aus. Eventuell durchleckendes Arbeitsmedium wird ohnedies über den Durchlass abgeführt.

Anhand der Zeichnungen werden nachstehend Ausführungsformen des Erfindungsgegenstandes erläutert.

Es zeigen:

Fig. 1 einen Längsschnitt durch eine erste Ausführungsform eines Hydraulikventils,

Fig. 2 eine Ansicht in Blickrichtung II-II der Ausführungsform nach Fig. 1,

Fig. 3 einen Längsschnitt durch eine weitere Ausführungsform eines Hydraulikventils,

Fig. 4 einen Längsschnitt durch eine weitere Ausführungsform eines Hydraulikventils, und

Fig. 5 eine Ansicht der Ausführungsform von Fig. 4 in Blickrichtung V-V.

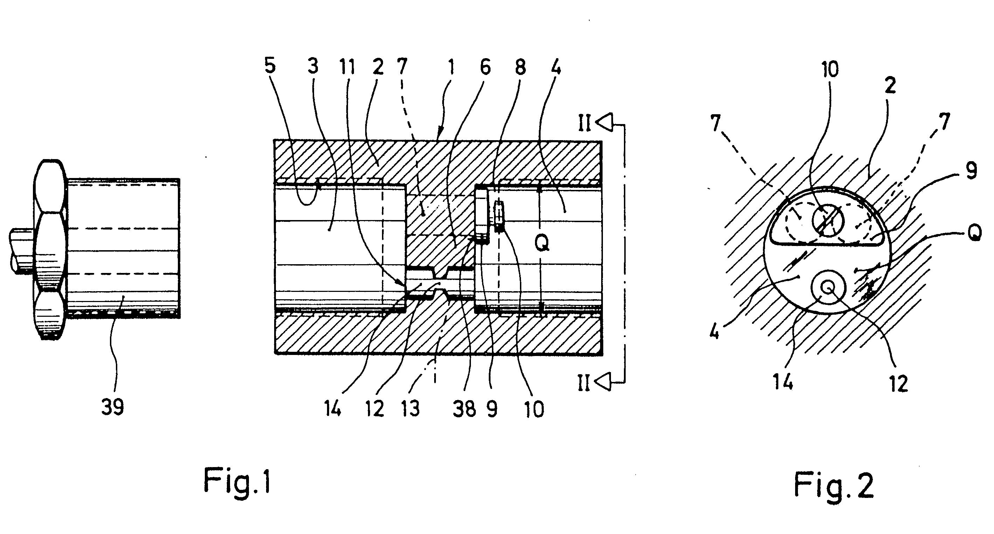

Ein Hydraulikventil 1 gemäss den Fig. 1 und 2 besitzt ein Gehäuse 2 mit einer Zulaufbohrung 3 und einer damit fluchtenden Ablaufbohrung 4. Die Bohrungen 3 und 4 sind als in Gehäuselängsrichtung verlaufende Blindbohrungen ausgebildet und werden durch eine im Gehäuse 2 ausgeformte Gehäusetrennwand 6 voneinander getrennt. Jede Bohrung 3, 4 besitzt ein Innengewinde 5 für eine Leitungs-Anschluss-Armatur 39 und hat einen Querschnitt Q.

Das Hydraulikventil 1 hat zwei Ventilfunktionen, nämlich eine Rückschlagfunktion und eine Drosselfunktion. Wie insbesondere Fig. 2 erkennen lässt, sind durch die Gehäusetrennwand 6 oberhalb der Mittelebene des Querschnitts Q zwei beabstandete Bohrungen geführt, die einen Durchlass 7 bilden. In der Ablaufbohrung 4 ist ein Rückschlagventil 8 vorgesehen, das aus einem als Plättchen ausgebildeten Rückschlagventilelement 9 und einem dieses beweglich führenden Führungselement 10 besteht, das in der Gehäusetrennwand 6 befestigt ist. Das Rückschlagventilelement 9 hat bei dieser Ausführungsform halbkreisförmige Gestalt und vermag beide Bohrungen des Durchlasses 7 abzudecken. Es arbeitet mit Ventilsitzen 38 in der Gehäusetrennwand zusammen. Das Führungselement 10 kann eine einfache Kopfschraube 10 sein, die das Rückschlagventilelement 9 an sich verdrehbar aber verschieblich führt. An der Innenwand der Ablaufbohrung führt sich das Rückschlagventilelement selbsttätig so, dass es ständig in der in Fig. 2 angedeuteten Lage bleibt.

In der unteren Hälfte des Querschnitts Q ist ein den Durchlass 7 umgehender Kanal 11 vorgesehen, der von einer durchgehenden Drosselbohrung 14 mit einer eingegliederten Drosselstelle 12 gebildet wird.

In der Drosselbohrung 14 mündet ein strichpunktiert angedeuteter Anschlusskanal, und zwar an der der Ablaufbohrung 4 zugewandten Seite der Drosselstelle 12.

Das Gehäuse kann als vierkantiger, runder oder sechskantiger Block ausgebildet sein. Ferner könnte zwischen dem Kopf des Führungselementes 10 und dem Rückschlagventilelement 9 eine Feder angeordnet werden. Der Schaft des Führungselementes 10 könnte im Querschnitt profiliert sein und das Rückschlagventilelement 9 auch gegen eine Verdrehung sichern.

In Fig. 1 wird das Hydraulikventil 1 von der Zulaufbohrung 3 in Strömungsrichtung zur Ablaufbohrung ungehindert durchströmt, weil das Rückschlagventilelement 9 vom Ventilsitz 38 abhebt und die Strömung über den unteren Teil des Querschnitts Q verlaufen kann. Dass dabei über die Drosselbohrung 14 ebenfalls eine geringfügige Strömung erfolgt ist nebensächlich.

Bei einer Strömung in der Gegenrichtung wird das Rückschlagventil 9 auf den Ventilsitz 38 aufgelegt, so dass die Strömung in dieser Richtung gesperrt ist. Es findet nur mehr eine gedrosselte Strömung über die Drosselbohrung 14 und die Drosselstelle 12 statt.

In beiden Strömungsrichtungen könnte im Anschlusskanal 13 ein Hilfssteuerdruck abgeleitet werden. Über den Anschlusskanal 13 könnte auch der jeweils an der Ablaufseite 4 herrschende Druck abgefühlt werden. Anstelle der Drosselstelle 12 könnte auch ein Fördermengenmessgerät oder ein Schaltelement vorgesehen sein. Es sind auf diese Weise innerhalb des durch die Bohrungen 3 und 4 begrenzten Querschnitts Q konstruktive Massnahmen für zwei voneinander getrennte Ventilfunktionen getroffen. Die in Fig. 1 linke Hälfte der Drosselbohrung 14 könnte verschlossen werden, so dass in der Sperrstellung des Rückschlagventils 8 eine Strömung in der gesperrten Strömungsrichtung unmittelbar in den Anschlusskanal 13 hinein erfolgen könnte. Denkbar ist es ferner, über den Anschlusskanal 13 zusätzlich Arbeitsmittel einzuspeisen.

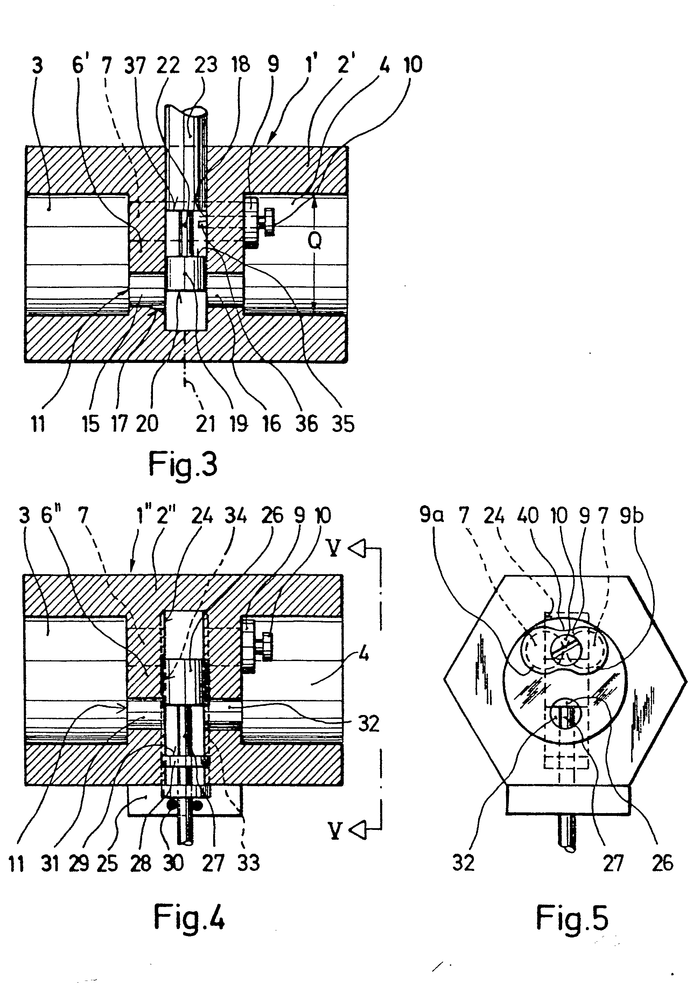

Bei der Ausführungsform des Hydraulikventils 1' von Fig. 3 ist als zweite Ventilfunktion neben dem Rückschlagventil eine veränderbare Drosselung vorgesehen. Zu diesem Zweck besteht der den Durchlass 7 umgehende Kanal 11 im Gehäuse 2' bzw. der Gehäusetrennwand 6' aus zwei innerhalb des Querschnitts Q liegenden, fluchtenden Bohrungen 15, 16. Die Bohrungen 15, 16 schneiden eine in die Gehäusetrennwand 6' von der oberen Gehäuseseite eingebrachte Führungsbohrung 18 für ein Drosselglied 19 mit zylindrischer Form. Die Bohrung 15 mündet dabei in die Führungsbohrung 18 mit einer Aufweitung 17, deren Zweck später erläutert wird. Das Drosselglied 19 besitzt eine ebene Stirnkante 20 und ist mit einer Verstellspindel 22 verbunden, die einen verdickten Schaft 23 besitzt, der aus dem Gehäuse 2' herausgeführt ist. Die beiden Bohrungen des Durchlasses 7 können die Führungsbohrung 18 schneiden oder auch aussen an dieser vorbeigeführt sein. Im unteren Ende der Führungsbohrung 18 mündet ein Anschlusskanal 21. Das Führungselement 10 ragt mit einem Anschlag 35 in die Führungsbohrung 18, in der Schaft 23 der Verstellspindel 22 und das Drosselglied 19 Anschläge 37 und 36 aufweisen, die am Anschlag 35 abgefangen werden, wenn das Drosselglied 19 seine beiden Endstellungen erreicht hat. Durch eine Verstellung des Drosselgliedes 19 mittels der Verstellspindel 22 wird die Drosselwirkung des Kanals 11 verändert. Je weiter das Drosselglied 19 in Fig. 3 nach unten verstellt wird, um so stärker ist die Drosselwirkung, die sich zwischen den Bohrungen 3 und 4 über zwei Druckabbaustufen vollzieht. Der insgesamt abzubauende Druck wird auf diese Weise in zwei Stufen abgebaut, was zu einer Unterdrückung eines störenden Arbeitsgeräusches führt. Die Aufweitung 17 der Bohrung 15 hat die Wirkung, dass die zwischen der Stirnkante 20 und der Bohrung 15 entstehende Druckabbaustufe weniger stark ist, als die zwischen der Stirnkante 20 und der Bohrung 16 vorliegende Druckabbaustufe. Dadurch wird bei einer Strömung von der Bohrung 4 in die Bohrung 3 der grössere Teil des abzubauenden Druckes in der ersten Druckabbaustufe und der kleinere Teil dann zwischen der Stirnkante 20 der Bohrung 15 abgebaut.

Die Bohrung 15 könnte auch verschlossen sein, so dass der Anschlusskanal 21 über eine Druckabbaustufe mit der Bohrung 4 verbunden wäre und bei gesperrtem Rückschlagventil eine gedrosselte Strömung zur Bohrung 4 in den Anschlusskanal 21 oder umgekehrt stattfinden könnte.

Bei der Ausführungsform der Fig. 4 und 5 hat das Rückschlagventil 9 schmetterlingsförmige Gestalt und besteht aus zwei kreisförmigen Flügeln 9a und 9b die über einen Mittelteil 40 miteinander verbunden sind. Der Mittelteil 40 wird vom Führungselement 10 durchsetzt. Zur Verdrehsicherung des Rückschlagventilelements 9 dient die Innenwand der Bohrung 4. Von der dem Durchlass 7 abgewandten Seite des Gehäuses 2'' des Hydraulikventils 1'' gemäss den Fig. 4 und 5 führt eine als Sackbohrung ausgebildete Führungsbohrung 24 in die Gehäusetrennwand 6''.

Die den Durchlass 7 bildenden Bohrungen schneiden zweckmässigerweise die Führungsbohrung 24. Am offenen Ende der Führungsbohrung 24 ist eine Abdeckung 25 befestigt, durch die eine Verstellspindel 27 für ein zylinderförmiges Drosselglied 26 nach aussen geführt wird. z.B. zu einem Drehgriff. In der Abdeckung 25 ist ein Dichtring 30 vorgesehen. Auf der Verstellspindel 27 ist in einem Abstand zum Drosselglied 26 ein Bund 28 befestigt, der dem Drosselglied 26 zugewandt eine Druckausgleichsfläche 29 aufweist. Die Führungsbohrung 24 besitzt ein Innengewinde 33, mit dem ein Aussengewinde 34 des Drosselgliedes 26 kämmt, so dass allein durch Verdrehen der Verstellspindel 27 und des Drosselgliedes 26 dieses mit der Führungsbohrung 24 verschraubt wird.

Der den Durchlass 7 umgehende Kanal 11 wird hier von zwei axialen Bohrungen 31, 32 gebildet, die zueinander in Verstellrichtung des Drosselgliedes 26 versetzt in die Führungsbohrung 24 münden. Damit wird erreicht, dass das Drosselglied 26 mit den Bohrungen 31, 32 zwei Druckabbaustufen bildet, in denen die Strömung unterschiedlich stark gedrosselt wird, und zwar zwischen der Bohrung 32 und der Führungsbohrung 24 stärker als zwischen der Bohrung 31 und der Führungsbohrung 24. Der das Drosselglied 26 in Fig. 4 nach oben belastende Druck wirkt gleichzeitig auf der Druckausgleichsfläche 29, so dass die Verstellung des Drosselgliedes 26 weitgehend druckausgeglichen erfolgen kann.

Auch bei der letztgenannten Ausführungsform wäre es möglich, eine der Bohrungen 31 oder 32 wegzulassen und einen Anschlusskanal (wie bei 21 in Fig. 3) vorzusehen, so dass für die weitere Ventilfunktion ein getrennter Strömungsweg stünde.

## Patentansprüche

1. Hydraulikventil mit einem Gehäuse (2, 2', 2''), in dem zwischen einer Zulaufbohrung (3) und einer damit fluchtenden Ablaufbohrung (4) eine wenigstens einen Durchlass (7) aufweisende Gehäusetrennwand (6, 6', 6'') vorgesehen ist, wobei dem Durchlass (7) ein Ventilsitz für ein in einer Strömungsrichtung sperrendes Rückschlagventilelement (9) zugeordnet ist, und mit wenigstens einem im Gehäuse den Durchlass umgehenden Kanal (11) für wenigstens eine weitere Ventilfunktion, dadurch gekennzeichnet, dass der Kanal (11) für die weitere Ventilfunktion gemeinsam mit dem Durchlass (7) in der Gehäusetrennwand (6, 6', 6'') und im wesentlichen innerhalb des durch die fluchtenden Anschlussbohrungen (3, 4) begrenzten Querschnitts (Q) des Gehäuses angeordnet ist, und dass der Durchlass (7) und der Kanal (11) im wesentlichen parallel zu den Anschlussbohrungen (3, 4) sind.

2. Hydraulikventil nach Anspruch 1, dadurch gekennzeichnet, dass der Querschnitt (Q) durch die Grösse in die Bohrungen (3, 4) einbringbarer Leitungs-Anschluss-Armaturen (39) begrenzt ist.

3. Hydraulikventil nach Anspruch 1 und 2, dadurch gekennzeichnet, dass im Gehäuse (2, 2') ein Anschlusskanal (13, 21) angeordnet ist, der in der Gehäusetrennwand (6, 6') an den Kanal (11) angeschlossen ist oder einen Teil desselben bildet.

4. Hydraulikventil nach wenigstens einem der Ansprüche 1 bis 3, wobei die weitere Ventilfunktion die eines Drosselventils mit in der vom Rückschlagventil gesperrten Strömungsrichtung gedrosselter Durchströmung ist, dadurch gekennzeichnet, dass der Kanal (11) ein Drosseldurchgang in der Gehäusetrennwand (6) ist.

5. Hydraulikventil nach wenigstens einem der Ansprüche 1 bis 4, wobei ein Drosselglied (19, 26) in den Kanal (11) eingreift, das zur Veränderung der Drosselwirkung verstellbar ist, dadurch gekennzeichnet, dass des Drosselglied (19, 26) in einer den Kanal (11) schneidenden und das Gehäuse (2', 2'') durchsetzenden Führungsbohrung (18, 24) in der Gehäusetrennwand (6', 6'') angeordnet ist.

6. Hydraulikventil nach wenigstens einem der Ansprüche 1 bis 5, dadurch gekennzeichnet, dass das Drosselglied (19) mit einer Verstellspindel (22) verbunden ist, die sich in der Führungsbohrung (18) innerhalb des bregrenzten Querschnitts (Q) einschliesslich des Bereiches des Durchlasses (7) und bis zu einer ausserhalb des Gehäuses (2') liegenden Verstelleinrichtung erstreckt.

7. Hydraulikventil nach wenigstens einem der Ansprüche 1 bis 6, dadurch gekennzeichnet, dass der Durchlass (7) aus mindestens zwei beiderseits der Achse der Führungsbohrung (18, 24) und im begrenzten Querschnitt (Q) aussermittig angeordneten Bohrungen in der Gehäusetrennwand (6, 6', 6'') besteht, und dass den beiden Bohrungen ein gemeinsames als Plättchen ausgebildetes Ventilelement (9) zugeordnet ist.

8. Hydraulikventil nach den Ansprüchen 1 bis 7, dadurch gekennzeichnet, dass das Plättchen zwei über einen Mittelteil (40) verbundene Flügel (9a, 9b) besitzt, und dass in die Gehäusetrennwand (6, 6', 6'') ein im Mittelteil (40) angreifendes Führungselement (10) für das Plättchen eingesetzt ist.

9. Hydraulikventil nach den Ansprüchen 1 bis 8, dadurch gekennzeichnet, dass an der Verstellspindel (22) wenigstens ein Anschlag (37, 36) angeordnet ist, und dass das Führungselement (10) bis in die Führungsbohrung (18) ragt und dort einen auf den Anschlag (37, 36) ausgerichteten Sicherungs- oder Stellbegrenzungsanschlag (35) für das Drosselglied (19) bildet.

10. Hydraulikventil nach den Ansprüchen 1 bis 9, dadurch gekennzeichnet, dass die den Durchlass (7) bildenden Bohrungen die Führungsbohrung (18, 24) schneiden.

11. Hydraulikventil nach den Ansprüchen 1 bis 10, dadurch gekennzeichnet, dass der Drosseldurchgang zwei von jeweils einer Seite der Gehäusetrennwand (6'') in die Führungsbohrung (24) führende, annähernd fluchtende Bohrungen (31, 32) aufweist, dass die Mündungen der Bohrungen in der Führungsbohrung in Verstellrichtung des Drosselgliedes (26) relativ zueinander versetzt sind, und dass das Drosselglied zylindrisch ausgebildet ist und mit den Mündungen zwei Druckabbaustufen unterschiedlicher Stärke bildet.

12. Hydraulikventil nach den Ansprüchen 1 bis 11, dadurch gekennzeichnet, dass der Anschlusskanal (21) an die Führungsbohrung (18) angeschlossen ist.

13. Hydraulikventil nach den Ansprüchen 1 bis 12, dadurch gekennzeichnet, dass die Ventilspindel (27) an der dem Durchlass (7) abgewandten Seite des Kanals (11) aus dem Gehäuse (2'') herausgeführt ist.

14. Hydraulikventil nach den Ansprüchen 1 bis 13, dadurch gekennzeichnet, dass das Drosselglied (26) ein Aussengewinde (34) besitzt und in einem Innengewindeabschnitt (33) der Führungsbohrung (24) verschraubbar ist.

## Claims

1. A hydraulic valve having a housing (2, 2', 2''), in which between an inlet bore (3) and an outlet bore (4) aligned therewith there is provided a housing partition (6, 6', 6'') formed with at least one passage (7) associated to a valve seat for a check valve element (9) closing in one flow direction, and at least one further passage (11) bypassing said passage within said housing for at least one further valve function, characterized in that said further passage (11) for said further valve function is formed together with said one passage (7) in said housing partition (6, 6', 6'') and disposed substantially within the cross-sectional area (Q) of said housing as defined by the two aligned connection bores (3, 4), and in that said one passage (7) and said further passage (11) extend substantially parallel to said connection bores (3, 4).

2. A hydraulic valve according to claim 1, characterized in that said cross-sectional area (Q) is defined by the size of conduit connector fittings (39) adapted to be mounted in said connection bores (3, 4).

3. A hydraulic valve according to claims 1 and 2, characterized in that said housing (2, 2') is formed with a branch passage (13, 21) connected to said further passage (11) within said housing partition (6, 6') or forming part thereof.

4. A hydraulic valve according to any of claims 1 to 3, wherein said further valve function is that of a throttle valve for restricted flow-through in the direction of flow interdicted by said check valve, characterized in that said further passage (11) is a restricted passage in said housing partition (6).

5. A hydraulic valve according to any of claims 1 to 4, wherein a throttle member (19, 26) projects into said further passage (11) and is adjustable for varying the throttling effect, characterized in that said throttle member (19, 26) is disposed in a guide bore (18, 24) in said housing partition (6', 6'') intersecting said further passage (11) and extending through said housing (2', 2'').

6. A hydraulic valve according to any of claims 1 to 5, characterized in that said throttle member (19) is connected to ad adjusting spindle (22) extending in said guide bore (18) within said defined cross-sectional area (Q) inclusive of the location of said one passage (7) and connected to an adjustment device located outside said housing (2').

7. A hydraulic valve according to any of claims 1 to 6, characterized in that said one passage (6) consists of two bores formed in said housing partition (6, 6', 6'') on opposite sides of the axis of said guide bore (18, 24) at an excentrically offset location of said defined cross-sectional area (Q) and that a valve element (9) formed as a small disc is associated to both bores in common.

8. A hydraulic valve according to any of claims 1 to 7, characterized in that said disc comprises two lobes (9a, 9b) interconnected by a center portion (40), and that a guide element (10) engaging said center portion (40) of said disc is mounted in said housing partition (6, 6', 6'').

9. A hydraulic valve according to any of claims 1 to 8, characterized in that said adjustment spindle (22) is provided with at least one stop (37, 36), and in that said guide element (10) projects into said guide bore (18) to form therein a safety or adjustment limiting stop (35) aligned with said at least one stop (37, 36).

10. A hydraulic valve according to any of claims 1 to 9, characterized in that the bores forming said one passage (7) intersect said guide bore (18, 24).

11. A hydraulic valve according to any of claims 1 to 10, characterized in that said throttle passage comprises two bores (31, 32) extending from opposite sides of said housing partition (6'') into said guide bore (24) in substantial alignment with one another, that the openings of said bores into said guide bore are offset relative to one another in the adjustment direction of said throttle member (26), and that said throttle member is of cylindrical shape and cooperates with said openings to form two pressure drop stages of different magnitude.

12. A hydraulic valve according to any of claims 1 to 11, characterized in that said connecting passage (21) is connected to said guide bore (18).

13. A hydraulic valve according to any of claims 1 to 12, characterized in that said adjustment spindle (27) extends out of said housing (2'') at the side of said further passage (11) facing away from said one passage (7).

14. A hydraulic valve according to any of claims 1 to 13, characterized in that said throttle member (26) is formed with outer screws threads (34) in threaded engagement with an interiorly threaded portion (33) of said guide bore (24).

**Revendications**

1. Valve hydraulique comprenant un corps (2, 2', 2''), dans lequel est prévue entre un alésage d'amenée (3) et un alésage de sortie (4) aligné sur ce dernier une cloison (6, 6', 6'') présentant au moins un passage (7), un siège pour un élément (9) formant clapet anti-retour qui interdit l'écoulement dans un sens étant associée au passage (7), et au moins un canal (11) contournant le passage dans le corps et destiné à au moins une fonction de valve additionnelle, caractérisée en ce que le canal (11) pour la fonction de valve additionnelle est disposé conjointement avec le passage (7) dans la cloison (6, 6', 6'') et essentiellement à l'intérieur de la section (Q) du corps limitée par les alésages de raccordement alignés (3, 4), et en ce que le passage (7) et la canal (11) sont sensiblement parallèles aux alésages de raccordement (3, 4).

2. Valve hydraulique selon la revendication 1, caractérisée en ce que la section (Q) est limitée par la taille de pièces de raccorderie (39) pouvant être introduites dans les alésages (3, 4).

3. Valve hydraulique selon la revendication 1 ou 2, caractérisée en ce que dans le corps (2, 2') est disposé un canal de raccordement (13, 21) qui dans la cloison (6, 6') est raccordé au canal (11) ou fait partie de celui-ci.

4. Valve hydraulique selon l'une quelconque des revendications précédentes, la fonction de valve additionnelle étant celle d'une valve d'étranglement avec un écoulement étranglé dans le sens d'écoulement interdit par le clapet anti-retour, caractérisée en ce que le canal (11) est un passage à étranglement dans la cloison (6) du corps.

5. Valve hydraulique selon l'une quelconque des revendications précédentes, un organe d'étranglement (19, 26) s'engageant dans le canal (11), lequel organe est réglable pour faire varier l'action d'étranglement, caractérisée en ce que l'organe d'étranglement (19, 26) est monté à l'intérieur de la cloison (6', 6'') dans un trou de guidage (18, 24) qui coupe le canal (11) et traverse le corps (2', 2'').

6. Valve hydraulique selon l'une quelconque des revendications précédentes, caractérisée en ce que l'organe d'étranglement (19) est relié à une broche de réglage (22) qui s'étend dans le trou de guidage (18) à l'intérieur de la section limitée (Q), y compris la région du passage (7), et jusqu'à un mécanisme de réglage situé à l'extérieur du corps (2').

7. Valve hydraulique selon l'une quelconque des revendications précédentes, caractérisée en ce que le passage (7) est constitué par au moins deux alésages ménagés dans la cloison (6, 6', 6'') et disposés, de part et d'autre de l'axe du trou de guidage (18, 24), de façon excentrée dans la section limitée (Q), et en ce qu'à ces deux alésages est associé un élément commun (9) formant clapet réalisé sous forme de plaquette.

8. Valve hydraulique selon l'une quelconque des revendications précédentes, caractérisée en ce que la plaquette comporte deux ailes (9a, 9b) reliées par l'intermédiaire d'un élément médian (40) et en ce que dans la cloison (6, 6', 6'') est mis en place un organe (10) destiné à guider la plaquette et agissant dans l'élément médian (40).

9. Valve hydraulique selon l'une quelconque des revendications précédentes, caractérisée en ce que sur la broche de réglage (22) est disposée au moins une butée (37, 36) et en ce que l'organe de guidage (10) s'étend jusque dans le trou de guidage (18) où il forme pour l'organe d'étranglement (19) une butée de sûreté ou de limitation de réglage (35) alignée sur la butée (37, 36).

10. Valve hydraulique selon l'une quelconque des revendications précédentes, caractérisée en ce que les alésages constituant le passage (7) coupent le trou de guidage (18, 24).

11. Valve hydraulique selon l'une quelconque des revendications précédentes, caractérisée en ce que le passage d'étranglement comporte deux alésages (31, 32) approximativement alignés et conduisant respectivement d'un côté et de l'autre de la cloison (6'') dans le trou de guidage (24), en ce que les embouchures des alésages dans le trou de guidage sont décalées l'une par rapport à l'autre dans la direction de réglage de l'organe d'étranglement (26) et en ce que l'organe d'étranglement est réalisé sous forme cylindrique et forme avec les embouchures deux étages réducteurs de pression de degrés d'action différents.

12. Valve hydraulique selon l'une quelconque des revendications précédentes, caractérisée en ce que le canal de raccordement (21) est raccordé au trou de guidage (18).

13. Valve hydraulique selon l'une quelconque des revendications précédentes, caractérisée en ce que la broche de réglage (27) s'étend, du côté du canal (11) éloigné du passage (7), en dehors du corps (2'').

14. Valve hydraulique selon l'une quelconque des revendications précédentes, caractérisée en ce que l'organe d'étranglement (26) présente un filetage extérieur (34) et peut être vissé dans une partie taraudée (33) du trou de guidage (24).

Fig.1

Fig.2

0 164 438

Fig.3

Fig.4

Fig.5